# EUROPEAN PATENT SPECIFICATION

(11) **EP 2 454 951 B1**
(45) Date of publication and mention of the grant of the patent: **26.06.2013**
(21) Application number: 11189403.6
(22) Date of filing: 16.11.2011
(51) Int. Cl.: A23L 1/30, A23L 1/305

(54) **A method for suppressing the acrid taste and/or metallic taste derived from potassium chloride**
Verfahren zur Unterdrückung des bitteren Geschmacks und/oder metallischen Geschmacks von Kaliumchlorid
Procédé pour la suppression du goût âcre et/ou du goût métallique dérivé du chlorure de potassium

(30) Priority: 18.11.2010 JP 2010257759
(43) Date of publication of application: 23.05.2012
(73) Proprietor: TableMark Co., Ltd., Tokyo 104-0045 (JP)
(72) Inventor: Tanizawa, Junko, Tokyo, Tokyo 144-0042 (JP); Shimokawa, Hisatoshi, Tokyo, Tokyo 144-0042 (JP)
(74) Representative: Isarpatent

(56) References cited:
- JP-A- 2009 278 917
- US-A- 5 637 618
- US-A1- 2008 193 591
- US-A1- 2009 143 488

## Description

The present invention relates to a method by which the acrid taste and/or metallic taste derived from the potassium chloride in foods is suppressed by using yeast-derived peptides or a composition containing them as an active ingredient.

In recent years, efforts are being made to reduce the salt (sodium chloride) intake with a view to preventing various diseases. Reduced salt content often compromises the palatability of foods or causes them to present only unsatisfactory flavor. To deal with this problem, potassium chloride is sometimes substituted for the salt. However, potassium chloride is known to present a characteristic acrid or metallic taste.

A means that has been proposed for coping with the unpleasant taste of potassium chloride is a method by which the unpleasant taste characteristic of potassium salts is suppressed by using at least one member of the group consisting of quinic acid or a quinic-acid containing composition, spilanthol or a spilanthol-containing plant extract or plant essential oil, and an Allium plant extract (Patent Document 1). Regarding the metallic taste of canned products, an agent for suppressing the metallic odor and taste of canned products is known and the active ingredient of this agent is a yeast extract obtained by first extracting a yeast with warm or hot water and then subjecting it to the action of a nucleic acid decomposing enzyme and an adenylic acid decomposing enzyme (Patent Document 2).

On the other hand, yeast-derived peptides are known to suppress bitterness (Patent Document 3).
Patent Document 1: Japanese Unexamined Patent Publication No. 2010-4767
Patent Document 2: Japanese Unexamined Patent Publication No. 2001-269249 (Japanese Patent No. 4271338)
Patent Document 3: Japanese Unexamined Patent Publication No. 2009-278917

Potassium chloride has not only a salt flavor but also a characteristic acrid taste and a metallic taste that is similar to the one that persists in the mouth after tin foil is chewed. The acrid taste and the metallic taste are different from a bitter taste in that they stimulate the mucous membrane in the oral cavity as a whole to persist in the mouth most intensely. Furthermore, unlike the bitter taste which imparts palatability as in beer, coffee and cacao, the acrid taste and the metallic taste are generally unpleasant.

Conventionally, extensive research has been conducted to suppress the bitterness of food compositions, pharmaceuticals and so forth but no method is known by which the acrid and metallic tastes of potassium chloride can be suppressed to satisfactorily low levels. A certain approach needs to be taken, such as, one for suppressing the acrid and metallic tastes of potassium chloride, or one for enhancing the salt flavor of potassium chloride to render it more like sodium chloride.

The present invention is generally directed to the case of using potassium chloride with a view to manufacturing low- or reduced-salt foods and it is particularly directed to providing a method by which the acrid taste and/or metallic taste of potassium chloride is suppressed in a safe and economical manner without compromising the palatability of the foods.

The present inventors made intensive studies in order to solve the above-mentioned problem and found as a result that when potassium chloride, as used with a view to manufacturing low- or reduced-salt foods, was combined with a yeast-derived peptide containing composition at least 50 wt% of which was occupied by the sum of the proportions of nonpolar side-chain amino acids and neutral side-chain amino acids, the acrid taste and/or metallic taste of potassium chloride could be effectively suppressed; the present invention has been accomplished on the basis of this finding.

The present invention provides the following:
[1] A food composition comprising
   a yeast-derived peptide containing composition comprising nonpolar side-chain amino acids and neutral side-chain amino acids in such amounts that their sum accounts for at least 50 wt% of the amount of total peptides, and
   potassium chloride.
[2] The food composition according to [1], wherein the yeast-derived peptide containing composition accounts for at least 0.01 wt% of the potassium chloride.
[3] The food composition according to [1] or [2], wherein the peptides have an average molecular weight of no more than 50,000.
[4] The food composition according to [3], wherein the peptides are ones that pass through an ultrafiltration membrane having a cutoff molecular weight of 50,000 but not through an ultrafiltration membrane having a cutoff molecular weight of 3,000.
[5] The food composition according to [4], wherein the yeast-derived peptide containing composition comprises 5'-ribonucleotide.
[6] The food composition according to [5], wherein the yeast-derived peptide containing composition further comprises umami amino acids.
[7] The food composition according to [1] or [2], which is a seasoning composition to be added to foods.
[8] A method of suppressing the acrid taste and/or metallic taste derived from potassium chloride in a food composition, which comprises adding to a food composition a yeast-derived peptide containing composition comprising nonpolar side-chain amino acids and neutral side-chain amino acids in such amounts that their sum accounts for at least 50 wt% of the amount of total peptides, in an amount of at least 0.01 wt% of potassium chloride to be added, to suppress the acrid taste and/or metallic taste derived from the potassium chloride.
[9] The method according to [8], wherein the peptides have an average molecular weight of no more than 50,000.
[10] The method according to [8] or [9], wherein the peptides are ones that pass through an ultrafiltration membrane having a cutoff molecular weight of 50,000 but not through an ultrafiltration membrane having a cutoff molecular weight of 3,000.
[11] A method of reducing the content of sodium chloride in a food composition, which comprises substituting potassium chloride and a yeast-derived peptide containing composition, in an amount of at least 0.01 wt% of the potassium chloride, comprising nonpolar side-chain amino acids and neutral side-chain amino acids in such amounts that their sum accounts for at least 50 wt% of the amount of total peptides for 10 to 90 wt% of the sodium chloride, wherein the potassium chloride compensates the salt taste of the sodium chloride, and the yeast-derived peptide containing composition suppresses the acrid taste and/or metallic taste derived from the potassium chloride.
[12] Use of a yeast-derived peptide containing composition comprising nonpolar side-chain amino acids and neutral side-chain amino acids in such amounts that their sum accounts for at least 50 wt% of the amount of total peptides in a method for suppressing the acrid taste and/or metallic taste derived from potassium chloride in a potassium chloride containing food.
[13] An agent for suppressing the acrid taste and/or metallic taste derived from potassium to be added to foods, which comprises a yeast-derived peptide containing composition comprising nonpolar side-chain amino acids and neutral side-chain amino acids in such amounts that their sum accounts for at least 50 wt% of the amount of total peptides.
[14] A salt substitute agent to be added to foods, which comprises a yeast-derived peptide containing composition and potassium chloride, the yeast-derived peptide containing composition comprising nonpolar side-chain amino acids and neutral side-chain amino acids in such amounts that their sum accounts for at least 50 wt% of the amount of total peptides.

The present invention is capable of suppressing the acrid taste and/or metallic taste derived from potassium chloride without compromising the palatability of foods that contain potassium chloride so that they can be labeled as low- or reduced-salt products.

The active ingredient of the present invention is derived from yeast extracts and since yeast extracts have heretofore been used in foods, this active ingredient can be used safely and at low cost.
FIG. 1 is a graph showing the amino acid distribution in the yeast extracts and other test substances that were measured in Example 4 for their ability to suppress the acrid taste and/or metallic taste derived from potassium chloride.
FIG. 2 is a graph showing the amino acid distribution in the non-yeast-derived peptide containing compositions that were measured in Example 4 for their ability to suppress the acrid taste and/or metallic taste derived from potassium chloride.

The term "food composition(s)" or "food(s)" as used herein also encompasses liquid substances such as beverages and soups that are ingested through the mouth. It may be intended for ingestion not only by humans but also by non-human animals (e.g. pets and domesticated animals). The food composition contains the active ingredient and any other ingredients. The food composition conceptually includes both additives for foods and the food as the final product.

The term "salt" as used herein refers to sodium chloride unless otherwise noted.

The food composition of the present invention which is suppressed in the acrid taste and/or metallic taste derived from potassium chloride is characterized in that a yeast-derived peptide containing composition at least 50 wt% of which is occupied by the sum of the proportions of nonpolar side-chain amino acids and neutral side-chain amino acids (which is hereinafter sometimes referred to as the yeast-derived peptide-containing composition of the present invention) is contained as the active ingredient. The "nonpolar side-chain amino acids" means amino acids with nonpolar side chains. Specific examples are glycine, alanine, valine, leucine, isoleucine, phenylalanine, tryptophan, methionine, and proline. On the other hand, the "neutral side-chain amino acids" means amino acids with neutral and polar side chains. Specific examples are serine, threonine, tyrosine, cysteine, asparagine, and glutamine. In the present invention, the yeast-derived peptide containing composition is the active ingredient and it may contain ingredients other than peptides or, alternatively, it may substantially consist of only peptides. Yeast extracts are included in the scope of yeast-derived peptide containing compositions that contain ingredients other than peptides.

When the yeast-derived peptide containing composition of the present invention is described as one at least 50 wt% of which is occupied by the sum of the proportions of nonpolar side-chain amino acids and neutral side-chain amino acids, this means that at least 50 wt% of the amino acids that compos peptides (amino acid residues) consist of amino acid residues with nonpolar side chains or amino acid residues with neutral side chains. In the present invention, the sum of the proportions of the nonpolar side-chain amino acids and the neutral side-chain amino acids suffices to account for at least 50 wt% of the peptides that are taken together as the active ingredient of the food composition that is suppressed in the acrid and/or metallic taste derived from potassium chloride, and it is not necessarily required that each individual peptide satisfy this numerical condition. Consider, for example, the case where the yeast-derived peptide containing composition to be added as the active ingredient is analyzed for the overall amino acid distribution (by weight); it suffices for the purposes of the present invention that the total amount by weight of the nonpolar side-chain amino acids and the neutral side-chain amino acids accounts for at least 50 wt% of the amount of total amino acids.

The peptides to be contained in the yeast-derived peptide containing composition of the present invention are not particularly limited in terms of their molecular weight as long as they are not free amino acids but are peptides; however, they preferably have an average molecular weight of 50,000 or less, more preferably between 3,000 and 50,000, and even more preferably between 3,000 and 10,000. In other preferred cases, the yeast-derived peptide containing composition as the active ingredient of the food composition of the present invention which is suppressed in the acrid taste and/or metallic taste derived from potassium chloride may comprise peptides that pass through an ultrafiltration membrane having a cutoff molecular weight of 50,000 but not through an ultrafiltration membrane having a cutoff molecular weight of 3,000 or it may comprise peptides that pass through an ultrafiltration membrane having a cutoff molecular weight of 10,000 but not through an ultrafiltration membrane having a cutoff molecular weight of 3,000. This is because the acrid taste and/or metallic taste derived from potassium chloride can be suppressed even more effectively by using peptides with an average molecular weight of not more than 50,000 as the active ingredient. In addition, if peptides having an average molecular weight of at least 3,000 are used as the active ingredient, the inherent palatability of foods to which potassium chloride should be added becomes less likely to be impaired.

The peptides to be contained in the yeast-derived peptide containing composition of the present invention are not particularly limited as long as they are derived from edible yeasts and those peptides which are commonly used in the manufacture of foods may be employed. Examples of such yeasts include baker's yeast used in bread making, torula yeast used in the manufacture of foods, livestock feed, etc., and brewer's yeast used in beer manufacturing. In view of high growth speed, baker's yeast and torula yeast are preferred, and yeasts belonging to the genera Saccharomyces and Candida are more preferred, with Saccharocymes cerevisiae and Candida utilis being particularly preferred.

The peptides to be contained in the yeast-derived peptide containing composition of the present invention are not particularly limited as long as they are peptides produced by yeasts but they are preferably obtained from yeast extracts or their preparations. This is because yeast extracts feature convenience as in production and the desired peptides can be obtained at low cost. In order to analyze the distribution of amino acids in a yeast extract, the following procedure may be taken: the weight distribution of free amino acids in the yeast extract is examined in the usual manner; then hydrochloric acid or other agent is used to decompose the peptides, proteins, etc. in the yeast extract, and the total amino acid distribution is determined; by extracting the free amino acid distribution from the determined total amino acid distribution, the weight of the peptides in the yeast extract is obtained.

A yeast extract preparation as obtained by processing the yeast extract in such a way that the sum of proportions of the nonpolar side-chain amino acids and neutral side-chain amino acids accounts for at least 50 wt% of the amount of total peptides may also be used as the yeast-derived peptide containing composition of the present invention. To obtain this yeast extract preparation, peptides that are rich in amino acid residues with basic or acidic side chains may be removed from the yeast extract. One way to remove the peptides with high content of basic or acidic side-chain amino acids from the yeast extract is by passing the yeast extract through columns packed with an acidic carrier or an basic carrier; the order of passing the yeast extract through the columns is not limited and it may be first passed through the column packed with an acidic carrier, then through the column packed with a basic carrier; alternatively, the yeast extract may be first passed through the column packed with a basic carrier, then through the column packed with an acidic carrier.

Yeast-derived peptides having an average molecular weight of no more than 50,000 can be prepared by first preparing a yeast extract in the usual manner, then passing it through an ultrafiltration member (first membrane) having a cutoff molecular weight of 50,000, and recovering the fraction that has passed through this first membrane. To obtain yeast-derived peptides having an average molecular weight between 3,000 and 50,000, a yeast extract prepared in the usual manner is passed through an ultrafiltration member (first membrane) having a cutoff molecular weight of 50,000; the fraction passing through this first membrane is then passed through an ultrafiltration member (second membrane) having a cutoff molecular weight of 3,000, and the fraction that has not passed through the second membrane is recovered. To obtain yeast-derived peptides having an average molecular weight between 3,000 and 10,000, a yeast extract prepared in the usual manner is passed through an ultrafiltration member (first membrane) having a cutoff molecular weight of 10,000; the fraction passing through this first membrane is then passed through an ultrafiltration member (second membrane) having a cutoff molecular weight of 3,000, and the fraction that has not passed through the second membrane is recovered.

The yeast extract as used in the present invention contains various components extracted from a yeast, as exemplified by amino acids, peptides, nucleic acids, and minerals. The relative proportions of the respective components can be adjusted by changing the type of the yeast, the culture conditions, or extraction conditions. The yeast extract may be in a concentrated, crude, liquid or dried form.

The method of obtaining the yeast extract is not particularly limited and any of the methods commonly used to elicit an extract from yeasts and other biological materials may be adopted. Such conventional extraction methods include autolysis and enzymolysis. Autolysis is a method in which the actions of enzymes inherent in the yeast are used to solubilize the yeast and extract its components; this method can produce a yeast extract with high content of free amino acids. Enzymolysis is a method in which the yeast is heated or otherwise treated to inactivate the enzymes and other components of the yeast and thereafter a decomposing enzyme is added to solubilize the yeast and extract its components. Since the external addition of a suitable enzyme allows for convenient control of the enzymatic reaction, making it possible to adjust the contents of free amino acids and nucleic acids. The enzyme to be used in enzymolysis is not particularly limited and any enzyme will do that is commonly employed to decompose biological components. Examples include enzymes that can decompose the cell walls of yeasts, proteolytic enzymes, and nucleic acid decomposing enzymes; by using these enzymes in appropriate combinations, various components can be efficiently extracted from the yeast.

In the present invention, a composition comprising peptides derived from one kind of yeast may be used as the active ingredient. Alternatively, a composition comprising peptides derived from more than one kind of yeast may be used as the active ingredient; for example, Saccharocymes cerevisiae and Candida utilis as separately cultured and harvested are mixed together to prepare a mixture of cells, from which an extract is elicited and used as the active ingredient; alternatively, two different yeast cultures are separately subjected to extraction and the resulting yeast extracts are mixed into a single yeast extract which may be used as the active ingredient. Culture of yeasts may be performed in the usual manner.

In addition to peptides, the yeast-derived peptide containing composition of the present invention may preferably contain other substances that are effective in suppressing an acrid taste and/or metallic taste, as well as substances that have a taste improving effect. For example, the composition preferably contains 5'-ribonucleotides and umami amino acids. This is another reason why a yeast extract is preferably used as the yeast-derived peptide containing composition; not only does it contain the yeast-derived peptide containing composition but it is also rich in 5'-ribonucleotides, umami amino acids, etc.

The present inventors' study has revealed that, as will be described in Examples later, 5'-ribonucleotides and umami amino acids are also effective in suppressing the KCI-derived acrid taste and/or metallic taste, although not so effective as the yeast-derived peptide containing composition at least 50 wt% of which is occupied by the sum of the proportions of nonpolar side-chain amino acids and neutral side-chain amino acids. This would be the reason why the effectiveness in suppressing the KCI-derived acrid taste and/or metallic taste can be enhanced by incorporating 5'-ribonucleotides, umami amino acids, etc. in the yeast-derived peptide containing composition.

The "5'-ribonucleotides" as used in the present invention means nucleic acid-based, taste developing substances that have umami. Exemplary 5'-ribonucleotides include 5'-inosinic acid, 5'-guanylic acid, 5'-adenylic acid, 5'-uradylic acid, 5'-cytidylic acid, and metal salts thereof. The origin of the 5'-ribonucleotides is not particularly limited and they may be synthetic products or derived from natural products. Synthetic products include nucleic acid-based seasonings such as disodium 5'-inosinate and disodium 5'-guanylate. Natural products include, for example, yeast extracts, bonito extracts, shiitake (Lentinus edodes) extracts, etc. In the present invention, 5'-ribonucleotides derived from yeast extracts are particularly preferred.

The "umami amino acids" as used in the present invention means amino acids having umami. Exemplary umami amino acids include acidic amino acids such as glutamic acid and aspartic acid.

In the present invention, the yeast-derived peptide containing composition may be added to oral compositions, such as foods and pharmaceuticals to be ingested through the mouth, that have potassium chloride added to prepare low- or reduced-salt products; as the result, the KCI-derived acrid taste and/or metallic taste that are sensed in the oral compositions (i.e., food compositions and oral pharmaceutical compositions) can be suppressed.

The amount in which the yeast-derived peptide containing composition may be added to the oral composition is not particularly limited if it is capable of suppressing the KCI-derived acrid taste and/or metallic taste to a desired extent and it can be determined appropriately by considering such factors as the type of the oral composition and the content of potassium chloride in it. Consider, for example, an oral composition to which potassium chloride is added instead of sodium chloride; the KCI-derived acrid taste and/or metallic taste in this oral composition can be suppressed by adding the yeast-derived peptide containing composition in an amount ranging from 10 times to a thousandth of the potassium chloride content in the oral composition, preferably ranging from an equal amount to a hundredth of the potassium chloride content. The yeast-derived peptide containing composition of the present invention is so effective in suppressing the KCI-derived acrid taste and/or metallic taste that even if it is added in a very small amount, the KCI-derived acrid taste and/or metallic taste in oral compositions can be adequately suppressed. The amount of use of the yeast-derived peptide containing composition which is specified above on the basis of the amount of potassium chloride substituted for sodium chloride is also applicable even when the subject of the present invention is food compositions, pharmaceutical compositions, seasoning compositions, a method of suppressing the KCI-derived acrid taste and/or metallic taste, a method of reducing the content of sodium chloride, a method for the treatment of a disease or a condition, use of the yeast-derived peptide containing composition for suppressing the KCI-derived acrid taste and/or metallic taste, an agent for suppressing the KCI-derived acrid taste and/or metallic taste, or a sodium chloride substitute.

The yeast-derived peptide containing composition of the present invention which is to be used in the method of the present invention for suppressing the acrid taste and/or metallic taste derived from potassium chloride may be the same as what is used as the active ingredient in the food composition of the present invention which is suppressed in terms of the acrid taste and/or metallic taste derived from potassium chloride. It is preferably a yeast extract, more preferably a yeast extract preparation which has been so conditioned that the peptides contained in it have an average molecular weight between 3,000 and 50,000.

The "food composition" as used in the present invention specifically covers the following products: processed meats (e.g. hams: boneless ham, loin ham, prosciutto, bone-in ham, and pressed ham; sausages: Vienna sausage, dry sausage, frankfurter, Bologna sausage, and Lyona sausage; bacons; corned beef; Chinese-style barbecued pork); snacks (e.g. potato chips, popcorn, corn snack, cracker, biscuit, cookie, and pretzel); soup or soup stock (e.g. corn soup, onion soup, tomato soup, bouillabaisse, consommé soup, miso soup, Japanese soup); preserved foods (e.g. pickled or salted foods); seasoning compositions (e.g. chicken consommé, beef consommé, chemical seasoning compositions, seasoned salt compositions, mayonnaise, tomato ketchup, Worstershire sause, sauce for pork cutlets, mop sauce, dressings, herbed salt, miso, soysauce, noodle sauce, Japanese soup stock, and shshi vinegar); sauces (e.g. white sauce, demiglace sauce, tomato sauce, meat sauce, curry block, and pasta sauce); fried foods (e.g. fried potato, fried chicken, and fried fish); and dairy products (e.g. cheese and butter). Also included as the "food composition" are breads, naan, crusts (e.g. pizza crust, pie crust, gyoza crust, and shao mai), tortilla, taco shell, cornflakes, and noodles (e.g. pasta, udon, and rice noodle, each being raw, dried or fried), as well as premixes for these products.

The present invention also finds application in the treatment of diseases or conditions that are associated with excessive salt intake, as well as diseases or conditions that may be ameliorated by reducing salt intake, and these diseases or conditions include the following: myocardial infarction, angina pectoris, brain stroke, hypertension, pregnant toxicosis, or people having relatively high blood pressure, and people having high sensitivity to salt. Cases of hypertension include: high normal blood pressure (with a systolic blood pressure of 130-139 mmHg or a diastolic blood pressure of 85-89 mmHg), mild hypertension (with a systolic blood pressure of 140-159 mmHg or a diastolic blood pressure of 90-99 mmHg), moderate hypertension (with a systolic blood pressure of 160-179 mmHg or a diastolic blood pressure of 100-109 mmHg), severe hypertension (with a systolic blood pressure of 180 mmHg and above or a diastolic blood pressure of 110 mmHg and above), and systolic hypertension (with a systolic blood pressure of 140 mmHg or above and a diastolic blood pressure of less than 90 mmHg).

The term "treatment" of a disease or condition as used in the present invention covers reduction of a risk for manifestation, delay of manifestation, prevention of manifestation, therapeutic treatment, arrest of progression, and delay thereof. The treatment covers not medical acts but also nonmedical acts by persons other than doctors, as exemplified by nutritionists.

The present invention may be used to establish guidance about diet as well as nutritional guidance, on persons who need be treated for diseases or conditions by persons other than doctors, as well as persons in need of dietary restriction, and those who want to live a healthier dietary life; the present invention also encompasses non-medical foods such as meals for diet, restricted sodium diet, care foods, and emergency foods that are intended for consumption by those people.

The present invention will now be described in greater detail by the following examples which, however, should not be taken as limiting. In the following description, all percentages are based on weight, unless otherwise noted.

### [Example 1]

The yeast extract Vertex IG20 (product of TableMark Co., Ltd.) was checked for its ability to suppress the acrid taste and/or metallic taste derived from potassium chloride.

Specifically, Vertex IG20 was added at varying concentrations to a 0.5% potassium chloride (KCl) solution and the resulting change in the intensity of the acrid taste and/or metallic taste of the 0.5% KCl solution was checked by a group of five professional panelists who performed a sensory evaluation on the following rating scale: score five for the intensity of the acrid taste and/or metallic taste of the 0.5% KCl solution per se, and score zero for the intensity of the acrid taste and/or metallic taste of distilled water. The individual scores had the following criteria for evaluation.
- 5.0 ...: Intense acrid taste and/or metallic taste felt (same as the acrid taste and/or metallic taste of the 0.5% KCl solution).
- 4.0 ...: Acrid taste and/or metallic taste felt.
- 3.0 ...: Acrid taste and/or metallic taste felt to some extent.
- 2.0 ...: Acrid taste and/or metallic taste felt slightly.
- 1.0 ...: Acrid taste and/or metallic taste felt almost negligibly.
- 0.0 ...: No acrid taste and/or metallic taste felt.

As the result, it was verified that the acrid taste and/or metallic taste of the 0.5% KCl solution could be suppressed by adding Vertex IG20. Table 1 shows the concentrations of Vertex IG20 added to the 0.5% KCl solution and the average values of the intensity of the acrid taste and/or metallic taste as evaluated by the five professional panelists. Obviously, the yeast extract Vertex IG20 added in very small amounts was sufficient to achieve an outstanding suppression of the acrid taste and/or metallic taste. It was also shown that the KCI-derived acrid taste and/or metallic taste could be suppressed to such a level that it was substantially the same as the intensity of the acrid taste and/or metallic taste of the 0.5% NaCl solution to produce no perceptible difference.

**[Table 1]**

| Solution with acrid taste and/or metallic taste | Concentration of Vertex IG20 [(w/w)%] | Intensity of acrid taste and/or metallic taste |
|---|---|---|
| 0.5% KCl solution | 0 | 5.0 |
| do | 0.01 | 4.2 |
| do | 0.05 | 2.6 |
| do | 0.1 | 2.0 |
| do | 0.2 | 1.2 |
| NaCl | 0 | 1.0 |

### [Reference Example 1] Preparation of Simulated Vertex IG20 Solution

A simulated solution was prepared that had substantially the same composition as Vertex IG20 but which contained no peptides. Specifically, Vertex IG20 was subjected to general analysis and the respective constituents were grouped by nature: for example, K+, Ca++, Fe++, etc. were grouped as inorganic salts; AMP (5'-adenylic acid), IMP (5'-inosinic acid), GMP (5'-guanylic acid), CMP (5'-cytidylic acid), UMP (5'-uracil acid), etc. were grouped as 5'-ribonucleotides; and citric acid, succinic acid, lactic acid, etc. were grouped as organic acids.

Thereafter, synthesizing agents (of analytical grade; products of Wako Pure Chemical Industries, Ltd.) were used to prepare a simulated solution by reconstituting the respective groups such that they consisted of the same components as in the case ofVertex IG20. The composition of the simulated solution is shown in Table 2. For the respective amino acids, the associated synthesizing agents were added as free amino acids.

**[Table 2]**

| | |
|---|---|
| Group | Constituents of Each Group |
| Water | |
| Salt | Calculated from Na value |
| Inorganic salts | Added as Cl salts of K, Ca, Mg, Fe, Zn, Cu, and Mn |
| 5'-Ribonucleotides | As anhydrous 2Na salts of AMP, IMP, GMP, CMP, and UMP |
| Organic acids | Citricacid,tartaricacid,malicacid,succinicacid,lacticacid, aceticacid, etc. |
| Saccharides | Glucose,fructose,etc. |
| Free acidic amino acids | Glu, Asp |
| Free basic amino acids | Arg, Lys, His |
| Free nonpolar amino acids and free neutral amino acids | Ala, Gly, Ser, Thr, Cys, Tyr, Val, Leu, Iso, Met, Trp, Phe, Pro |
| Other trace components | Glutathione,creatines,vitamins,etc. |

### [Example 2]

Vertex IG20 and the simulated solution prepared in Reference Example 1 were each added to a 0.5% KCl solution to give a concentration of 0.2%, and the intensity of the KCI-derived acrid taste and/or metallic taste was evaluated as in Example 1.

As a result, the average score for the intensity of the acrid taste and/or metallic taste as sensed by the five professional panelists in the KCl solution to which Vertex IG20 had been added was 1.2 whereas it was 2.4 for the KCl solution to which the simulated solution had been added.

Since the KCl solution to which the simulated solution had been added was less intense in the acrid taste and/or metallic taste than the pure KCl solution, it was verified that components in the simulated solution also had the ability to suppress the acrid taste and/or metallic taste. However, the KCl solution to which Vertex IG20 had been added was less intense in the acrid taste and/or metallic taste than the KCl solution to which the simulated solution had been added, so it is clear that Vertex IG20 had substances that were absent from the simulated solution and which yet had the ability to suppress the acrid taste and/or metallic taste.

### [Reference Example 2] Identifying the Components in the Simulated Solution that were Effective in Suppressing Acrid Taste and/or Metallic Taste

In order to identify the components in the simulated solution that were effective in suppressing the acrid taste and/or metallic taste, an omission test was conducted on each of the groups listed in Table 2 to screen for groups the elimination of which caused the simulated solution to be no longer effective or to become less effective in suppressing the acrid taste and/or metallic taste. For this purpose, the intensity of acrid taste and/or metallic taste was evaluated as in Example 2 and the resulting order of intensity was based upon to determine the effectiveness for suppressing the acrid taste and/or metallic taste. As a result, the effectiveness for suppressing the acrid taste and/or metallic taste disappeared or attenuated only when the group of 5'-ribonucleotides or the group of free acidic amino acids was eliminated.

In the next place, the constituents in the group of 5'-ribonucleotides and those in the group of free acidic amino acids were added, either individually or in combination, to a 0.5% KCl solution and the respective constituents in each group were checked for their effectiveness in suppressing the acrid taste and/or metallic taste. As a result, the effectiveness in suppressing the acrid taste and/or metallic taste was observed when IMP, GMP, AMP, CMP, UMP, glutamic acid (Glu) and aspartic acid (Asp) were added, both individually and in combination. As already noted, glutamic acid and aspartic acid (i.e., acidic amino acids) are umami amino acids, and IMP, GMP, AMP, CMP, and UMP are nucleic acid-based taste developing substances that have umami.

### [Example 3]

The peptides which were contained in Vertex IG20 but not in the simulated solution were checked for their ability to suppress the acrid taste and/or metallic taste.

### (1) Preparation of solutions from yeast-derived peptide containing compositions

First, a 1% Vertex IG20 solution was fractionated with a UF (ultrafiltration) membrane having a nominal cutoff molecular weight of 50,000 (product of Asahi Kasei Corporation; AHP-0013). Then, the liquid fraction passing through the membrane was further fractionated with a UF (ultrafiltration) membrane having a nominal cutoff molecular weight of 10,000 (product of Asahi Kasei Corporation; SLP-0053). The liquid fraction not passing through the membrane was recovered, diluted twofold (on a weight basis) with distilled water, and fractionated again with a UF (ultrafiltration) membrane having a nominal cutoff molecular weight of 10,000; the liquid not passing through the membrane was recovered. This cycle of dilution and fractionation was repeated for a total of five times and the peptides in the liquid fraction that eventually did not pass through the membrane were recovered as peptides having an average molecular weight between 10,000 and 50,000.

Similarly, a 1% Vertex IG20 solution was fractionated with a UF (ultrafiltration) membrane having a nominal cutoff molecular weight of 10,000 (product of Asahi Kasei Corporation; SLP-0053). Then, the liquid fraction passing through the membrane was further fractionated with a UF (ultrafiltration) membrane having a nominal cutoff molecular weight of 3,000 (product of Asahi Kasei Corporation; SEP-0013). The liquid fraction not passing through the membrane was recovered, diluted twofold (on a weight basis) with distilled water, and fractionated again with a UF (ultrafiltration) membrane having a nominal cutoff molecular weight of 3,000; the liquid not passing through the membrane was recovered. This cycle of dilution and fractionation was repeated for a total of five times and the peptides in the liquid fraction that eventually did not pass through the membrane were recovered as peptides having an average molecular weight between 3,000 and 10,000.

### (2) Values for analysis of amino acids in the respective yeast-derived peptide containing compositions

The weight proportions of the total peptides in Vertex IG20, as well as the peptides with an average molecular weight between 10,000 and 50,000, and the peptides with an average molecular weight between 3,000 and 10,000 were determined and the results are shown in Table 3. The amount of the total peptides in Vertex IG20 was calculated by subtracting the values for analysis of free amino acids in Vertex IG20 from the values for analysis of total amino acids.

The amino acid analytical values for Vertex IG20 are shown in Table 4 with respect to the total amino acids, free amino acids, total peptides, peptides with an average molecular weight between 10,000 and 50,000, and peptides with an average molecular weight between 3,000 and 10,000.

**[Table 3]**

| | |
|---|---|
| Peptide contents in Vertex IG20 | |
| Total peptides | 10.9(w/w)% |
| Peptides with an average molecular weight between 10,000 and 50,000 | 0.3(w/w)% |
| Peptides with an average molecular weight between 3,000 and 10,000 | 3.4(w/w)% |

**[Table 4]**

| Amino acid distribution in Vertex IG20 (mg/100 g) | | | | | |
|---|---|---|---|---|---|
| | Total amino acids | Free amino acids | Total peptides | Peptides with average MW of 10,000-50,000 | Peptides with average MW of 3,000-10,000 |
| Asp | 1469 | 191 | 1278 | 470.0 | 23.4 |
| Thr | 593 | 151 | 442 | 253.9 | 0 |
| Ser | 581 | 114 | 467 | 241.3 | 14.6 |
| Glu | 8709 | 5966 | 2743 | 723.4 | 33.7 |
| Gly | 2778 | 501 | 2277 | 20.7 | 27.6 |
| Ala | 2186 | 1672 | 514 | 248.6 | 20.4 |
| Val | 1041 | 650 | 391 | 111.1 | 23.4 |
| Cys | 738 | 434 | 304 | 0 | 0 |
| Met | 217 | 108 | 109 | 30.7 | 20.6 |
| Iso | 531 | 198 | 333 | 116.5 | 9.3 |
| Leu | 717 | 294 | 423 | 150.3 | 21.3 |
| Tyr | 210 | 125 | 85 | 110.1 | 20.7 |
| Phe | 459 | 192 | 267 | 87.6 | 16.5 |
| Lys | 1062 | 384 | 678 | 206.3 | 17.8 |
| His | 298 | 168 | 130 | 42.5 | 9.6 |
| Arg | 760 | 602 | 158 | 54.7 | 10.9 |
| Pro | 642 | 320 | 322 | 492.5 | 40.9 |
| Total | 22991 | 12070 | 10921 | 3360.2 | 310.7 |

The sum of the proportions of nonpolar side-chain amino acids and neutral side-chain amino acids accounted for 54.3 wt% of the total peptides and the sum of the proportions of peptides that passed through the ultrafiltration membrane having a cutoff molecular weight of 50,000 but not through the ultrafiltration membrane having a cutoff molecular weight of 10,000, and peptides that passed through the ultrafiltration membrane having a cutoff molecular weight of 10,000 but not through the ultrafiltration membrane having a cutoff molecular weight of 3,000 accounted for 56.6 wt% of the total peptides.

### (3) Measuring the ability of the respective yeast-derived peptide containing compositions to suppress the acrid taste and/or metallic taste

The total peptides in Vertex IG20, as well as the peptides with an average molecular weight between 10,000 and 50,000, and the peptides with an average molecular weight between 3,000 and 10,000 were measured for their ability to suppress the acrid taste and/or metallic taste.

Specifically, Vertex IG20, as well as the peptides with an average molecular weight between 10,000 and 50,000, and the peptides with an average molecular weight between 3,000 and 10,000, each peptide group being prepared in (1) above, were added to samples of a 0.5% KCl solution in such amounts that the resulting solutions each had a Vertex IG20 concentration of 0.2%, and those solutions were evaluated for the intensity of acrid taste and/or metallic taste as in Example 1.

As a result, the average score for the intensity of the acrid taste and/or metallic taste as sensed by the five professional panelists in the KCl solution to which Vertex IG20 had been added was 1.2 whereas it was 2.8 for the KCl solution to which the peptides with an average molecular weight between 10,000 and 50,000 had been added and 1.8 for the KCl solution to which the peptides with an average molecular weight between 3,000 and 10,000 had been added. Thus, it is clear that among the constituents of Vertex IG20, the peptides having an average molecular weight of 50,000 and less, preferably 10,000 and less, are effective in suppressing the acrid taste and/or metallic taste.

### [Example 4]

In addition, the peptide contents of the yeast extracts and other test substances, as well as the contents of 5'-ribonucleotides and umami amino acids (glutamic acid and aspartic acid) which were demonstrated in Reference Example 2 to have the ability to suppress the acrid taste and/or metallic taste were measured. The results are also shown in Table 5, in which the values for <5'-ribonucleotides> were calculated in terms of an anhydrous disodium salt, the values for <umami developing amino acids> were calculated in terms of glutamic anhydride and aspartic anhydride, and the values for <peptides> were obtained by subtracting the contents of free amino acids from the content of total amino acids.

Specifically, the yeast extracts and other test substances were added to samples of a 0.5% KCl solution to give a concentration of 0.2% as in Example 3(3) and the resulting intensity of the acrid taste and/or metallic taste was evaluated as in Example 1. The results are shown in Table 5, in which "3k-10k" refers to the Vertex IG20-derived peptides having an average molecular weight of 3,000 to 10,000 and "10k-50k" to the Vertex IG20-derived peptides having an average molecular weight of 10,000 to 50,000.

In addition, the peptide contents of the yeast extracts and other test substances, as well as the contents of 5'-ribonucleotides and umami amino acids (glutamic acid and aspartic acid) which were demonstrated to have the ability to suppress the acrid taste and/or metallic taste were measured. The results are also shown in Table 5, in which the values for <5'-ribonucleotides> were calculated in terms of an anhydrous disodium salt, the values for <umami developing amino acids> were calculated in terms of glutamic anhydride and aspartic anhydride, and the values for <peptides> were obtained by subtracting the contents of free amino acids from the content of total amino acids.

As the result, it became clear that Vertex IG20 had the highest ability to suppress the acrid taste and/or metallic taste. Yeast extract A was verified to have the ability to suppress the acrid taste and/or metallic taste but the other yeast extracts were not verified to have any particular ability to suppress the acrid taste and/or metallic taste.

Hence, the procedure of Reference Example 1 was followed to prepare a simulated solution that had substantially the same composition as yeast extract A but which contained no peptides, and it was checked for the ability to suppress the acrid taste and/or metallic taste by the same method as used to evaluate yeast extract A. The results are also shown in Table 5.

From the results shown in Table 5, it is clear that the contents of 5'-ribonucleotides and acidic amino acids in the yeast extracts and other test substances have only low correlation with the ability to suppress the acrid taste and/or metallic taste and that among the yeast-derived peptide containing compositions tested, only those which had particular peptide distributions were capable of suppressing the acrid taste and/or metallic taste.

**[Table 5]**

| | 5'-ribonucleotides [(w/w)%] | umami amino acids [(w/w)%] | peptides [(w/w)%] | intensity of acrid taste and/or metallic taste |
|---|---|---|---|---|
| VertexIG20 | 28.81 | 6.16 | 10.9 | 1.2 |
| 3k-10k | 0 | 0 | 0.3 | 2.8 |
| 10K-50K | 0 | 0 | 3.4 | 1.8 |
| Simulated Vertex IG20 solution | 28.81 | 6.16 | 0 | 2.4 |
| Yeast extract A | 26.43 | 5.37 | 5.0 | 2.8 |
| Simulated yeast extract A solution | 26.43 | 5.37 | 0 | 3.2 |
| Yeast extract 21TF | 4.11 | 1.46 | 15.4 | 3.8 |
| Yeast extract 21 V | 0.55 | 7.82 | 3.3 | 4.2 |
| Yeast extract 2 1 A | 0.59 | 4.72 | 17.3 | 4.2 |
| Yeast extract B | 0.14 | 3.40 | 8.9 | 4.6 |
| Yeast extract C | 0.28 | 5.52 | 17.6 | 4.6 |
| Yeast extract D | 12.11 | 3.18 | 25.3 | 3.6 |
| Yeast extract E | 6.58 | 2.71 | 16.3 | 4.8 |

### [Example 5]

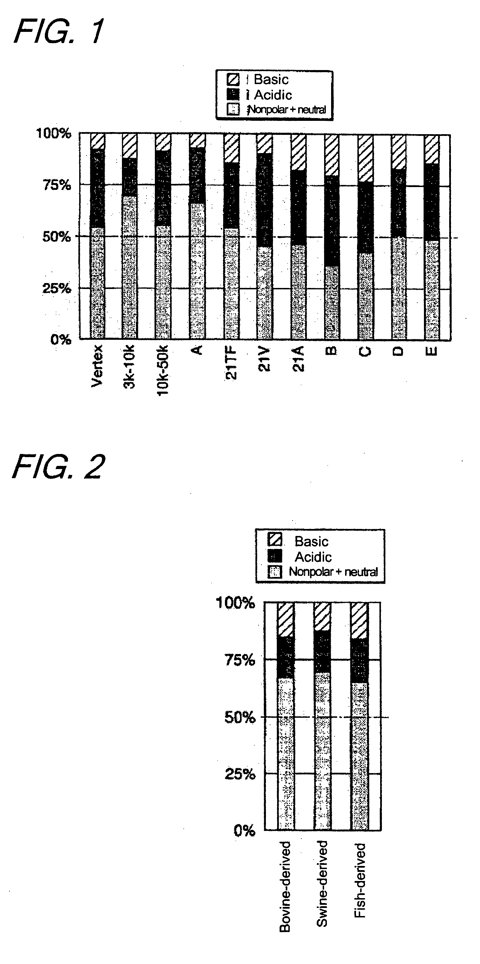

Analysis for amino acid distribution was conducted on the 11 test substances that were measured for the ability to suppress the acrid taste and/or metallic taste in Example 4, i.e., Vertex IG20, the Vertex IG20-derived peptides having an average molecular weight of 10,000 to 50,000, the Vertex IG20-derived peptides having an average molecular weight of 3,000 to 10,000, yeast extract 21TF, yeast extract 21V, yeast extract 21A, and yeast extracts A to E, and the results were classified into three sections, the sum of acidic amino acids, the sum of basic amino acids, and the sum of nonpolar side-chain amino acids and neutral polar amino acids, and the respective groups were compared with each other. The results are shown in FIG. 1, in which "Vertex" refers to Vertex IG20, "3k-10k" to the Vertex IG20-derived peptides having an average molecular weight of 3,000 to 10,000, "10k-50k" to the Vertex IG20-derived peptides having an average molecular weight of 10,000 to 50,000", "21TF" to yeast extract 21TF, "21V" to yeast extract 21V, "21 A" to yeast extract 21 A, and "A" to "E" refer to yeast extracts A to E, respectively. FIG. 1 has other labels; "acidic" refers to the sum of acidic amino acids, "basic" to the sum of basic amino acids, and "nonpolar + neutral" to the sum of nonpolar side-chain amino acids and neutral polar amino acids.

As the result, the four substances that had high ability to suppress the acrid taste and/or metallic taste in Example 4, i.e., Vertex IG20, the Vertex IG20-derived peptides having an average molecular weight of 10,000 to 50,000, the Vertex IG20-derived peptides having an average molecular weight of 3,000 to 10,000, and yeast extract A, were found to be such that the sum of the proportions of nonpolar side-chain amino acids and neutral polar amino acids accounted for at least 50 wt% of the amount of total amino acids. This was also true with yeast extracts 21TF and D which were found to be effective in suppressing the acrid taste and/or metallic taste; however, yeast extracts 21V and 21 A as well as yeast extracts B, C and E were such that the sum of the proportions of nonpolar side-chain amino acids and neutral polar amino acids accounted for less than 50 wt% of the amount of total amino acids.

From these results, it is clear that the effectiveness for suppressing the acrid taste and/or metallic taste was only exhibited by those yeast-derived peptide containing compositions which were such that the sum of the proportions of nonpolar side-chain amino acids and neutral polar amino acids accounted for at least 50 wt% of the amount of total amino acids.

### [Example 6]

To samples of KCl-containing, reduced-salt consommé soup (with the formula shown in Table 7), Vertex IG20, Vertex IG20-derived peptides having an average molecular weight of 3,000 to 50,000, 5'-ribonucleotides, and a mixture of umami amino acids (acidic amino acids) were respectively added and the resulting intensity of acrid taste and/or metallic taste was investigated. To prepare the Vertex IG20-derived peptides having an average molecular weight of 3,000 to 50,000, the Vertex IG20-derived peptides with an average molecular weight of 3,000 to 10,000 that were prepared in Example 3(1) were mixed with the Vertex IG20-derived peptides with an average molecular weight of 10,000 to 50,000 that were also prepared in Example 3(1). To prepare the 5'-ribonucleotides, a solution having the same composition as the simulated solution prepared in Reference Example 1 (see Table 2) was freed of the compounds other than 5'-ribonucleotides. To prepare the mixture of umami amino acids, a solution having the same composition as the simulated solution prepared in Reference Example 1 was freed of the compounds other than free acidic amino acids.

Specifically, the test additives were added, either alone or in combinations as shown in Table 6, to samples of KCl-containing, reduced-salt consommé soup and the resulting intensity of the acrid taste and/or metallic taste was checked by a group of five professional panelists who performed a sensory evaluation on the respective samples. The amounts of addition of the additives to the KCI-containing, reduced-salt consommé soup were so adjusted that they would be 0.1% in terms of Vertex IG20. The results of evaluation of the intensity of acrid taste and/or metallic taste are shown in Table 6, in which "Blank" refers to the KCI-containing, reduced-salt consommé soup on its own, "Vertex" to Vertex IG20, and "Vertex 3k-50k" to the Vertex IG20-derived peptides having an average molecular weight of 3,000 to 50,000. The column of "scores in the evaluation of acrid taste and/or metallic taste" lists average values for relative evaluation with the intensity of the acrid taste and/or metallic taste of Blank being taken as 5; the greater the numerical value, the stronger the acrid taste and/or metallic taste. The column of "scores of preference" lists average values for the order of preference, with smaller numerals indicating greater preference.

As the result, the addition of Vertex IG20 was the most effective in suppressing the acrid taste and/or metallic taste. When the Vertex IG20-derived peptides having an average molecular weight of 3,000 to 50,000 were added, the acrid taste and/or metallic taste was suppressed more effectively than in the absence of those peptides irrespective of whether they were used in combination with 5'-ribonucleotides or umami amino acids. When those peptides were used in combination with 5'-ribonucleotides or umami amino acids, a tendency for increased preference was observed. In particular, the case where Vertex IG20 was added independently and the case where the Vertex IG20-derived peptides having an average molecular weight of 3,000 to 50,000 were used in combination with 5'-ribonucleotides and umami amino acids gave almost the same values in terms of both "scores in the evaluation of acrid taste and/or metallic taste" and "scores of preference", thus making it clear that the addition of Vertex IG20 was effective not only for suppressing the acrid taste and/or metallic taste but also for improving palatability.

Thus, these results make the following points clear: those yeast-derived peptide containing compositions which are such that the sum of the proportions of nonpolar side-chain amino acids and neutral polar amino acids accounts for at least 50% of the amount of total amino acids are effective in suppressing the acrid taste and/or metallic taste to thereby enhance the palatability of foods compositions that contain potassium chloride for the specific purpose of manufacturing low- or reduced-salt products; and this effect is further enhanced by using those yeast-derived peptide containing compositions in combination with 5'-ribonucleotides or umami amino acids.

**[Table 6]**

| | Vertex | Vertex 3k-50k | 5'-ribonucle otides | umami amino acids | scores in the evaluation of acrid taste and/or metallic taste | scores of preference |
|---|---|---|---|---|---|---|
| Sample 1 (Blank) | - | - | - | - | 4.8 | 9.5 |
| Sample 2 | + | - | - | - | 1.2 | 1.2 |
| Sample 3 | - | - | - | + | 4.3 | 8.2 |
| Sample 4 | - | - | + | - | 3.7 | 6.7 |
| Sample 5 | - | + | - | - | 2.8 | 3.4 |
| Sample 6 | - | - | + | + | 3.3 | 5.8 |
| Sample 7 | - | + | - | + | 3.5 | 3.1 |
| Sample 8 | - | + | + | - | 2.5 | 2.9 |
| Sample 9 | - | + | + | + | 1.3 | 1.3 |

**[Table 7]**

| Ingredients | Reduced-salt consommé soup (Blank) [(w/w)%] |
|---|---|
| Sugar | 0.40 |
| Chicken extract powder | 0.23 |
| Onion extract powder | 0.06 |
| Carrot extract powder | 0.04 |
| Garlic powder | 0.02 |
| naganegi onion oil | 0.01 |
| Potassium chloride | 0.40 |
| Salt | 0.40 |

### [Reference Example 3] Measuring the Ability of Non-yeast-derived Peptides to Suppress the KCI-derived Acrid Taste and/or Metallic Taste

Bovine-, swine-, and fish-derived peptides were checked for their ability to suppress the KCI-derived acrid taste and/or metallic taste.

Those peptides, each being a product of Nippi, inc. and having an average molecular weight between 3,000 and 5,000, were obtained by hydrolyzing bovine-, swine- and fish-derived proteins. These peptides were analyzed for amino acid distribution and the results were classified into three sections, the sum of acidic amino acids, the sum of basic amino acids, and the sum of nonpolar side-chain amino acids and neutral polar amino acids, and the respective groups were compared with each other. The results are shown in FIG. 2, in which "acidic", "basic" and "nonpolar + neutral" have the same meanings as defined for FIG. 1. FIG. 2 has other labels; "bovine-derived" refers to bovine-derived peptides having an average molecular weight of 3,000 to 5,000; "swine-derived" refers to swine-derived peptides having an average molecular weight of 3,000 to 5,000; and "fish-derived" refers to fish-derived peptides having an average molecular weight of 3,000 to 5,000. As the result, the peptides derived from either species were such that the sum of the proportions of nonpolar side-chain amino acids and neutral polar amino acids accounted for at least 50% of the amount of total amino acids.

Thereafter, as in Example 3(3), the peptides derived from the respective species were added to samples of 0.5% KCl solution to give a concentration of 0.2% and the resulting intensity of the KCI-derived acrid taste and/or metallic taste was evaluated.

As it turned out, irrespective of their origin (the species from which they were derived), the peptides were not found to be effective in suppressing the KCI-derived acrid taste and/or metallic taste. Thus, it is clear that the yeast-derived peptide composition has a specific ability to suppress the KCI-derived acrid taste and/or metallic taste.

### [Example 7]

Vertex IG20 was added to a KCI-containing, 40% salt-reduced snack food (potato chips; see Table 8 for the names and proportions of seasonings added to 100 g of unseasoned, sliced potato chips) and the resulting intensity of acrid taste and/or metallic taste was evaluated. The results are shown in Table 9, in which "Blank" refers to reduced-salt potato chips with no KCl added; "Control" refers to KCI-containing, reduced-salt potato chips; and "Vertex" refers to reduced-salt potato chips to which KCl and Vertex IG20 had been added. The column of "scores in the evaluation of acrid taste and/or metallic taste" lists average values for relative evaluation with the intensity of the acrid taste and/or metallic taste of Blank being taken as 1 and the intensity of the acrid taste and/or metallic taste of Control being taken as 5; the greater the numerical value, the stronger the acrid taste and/or metallic taste. The column of "scores of preference" lists average values for the order of preference, with smaller numerals indicating greater preference. For the evaluation, a sensory test was performed by a group of five professional panelists. Vertex IG20 was added to give a concentration of 0.2%.

**[Table 8]**

| Ingredients | (Blank) | (Control) | (Vertex IG20) |
|---|---|---|---|
| | [(w/w)%] | [(w/w)%] | [(w/w)%] |
| Sugar | 0.83 | 0.83 | 0.83 |
| Chicken extract powder | 0.95 | 0.95 | 0.95 |
| Onion extract powder | 0.04 | 0.04 | 0.04 |
| Garlic powder | 0.04 | 0.04 | 0.04 |
| Black pepper | 0.12 | 0.12 | 0.12 |
| Chili pepper | 0.16 | 0.16 | 0.16 |
| Cheese powder | 0.06 | 0.06 | 0.06 |
| Paprika | 0.04 | 0.04 | 0.04 |
| Salt | 1.20 | 1.20 | 1.20 |
| Potassium chloride | 0 | 0.80 | 0.80 |
| Vertex IG20 | 0 | 0 | 0.20 |

**[Table 9]**

| | (Blank) | (Control) | (Vertex IG20) |
|---|---|---|---|
| Scores in the evaluation of acrid taste and/or metallic taste | 1.0 | 5.0 | 1.4 |
| Scores of preference | 2.0 | 3.0 | 1.0 |

From the data in Table 9, it became clear that Vertex IG20, when added to snack foods, was effective not only for suppressing the KCI-derived acrid taste and/or metallic taste but also for improving their palatability.

### [Example 8]

Vertex IG20 was added to a KCI-containing, 30% salt-reduced, processed meat product (sausage; see Table 10 for the names and proportions of seasonings added to 100 g of unseasoned, minced meat) and the resulting intensity of acrid taste and/or metallic taste was evaluated. The results are shown in Table 11, in which "Blank" refers to reduced-salt sausage with no KCl added; "Control" refers to KCI-containing, reduced-salt sausage; and "Vertex" refers to reduced-salt sausage to which KCl and Vertex IG20 had been added. The column of "scores in the evaluation of acrid taste and/or metallic taste" lists average values for relative evaluation with the intensity of the acrid taste and/or metallic taste of Blank being taken as 1 and the intensity of the acrid taste and/or metallic taste of Control being taken as 5; the greater the numerical value, the stronger the acrid taste and/or metallic taste. The column of "scores of preference" lists average values for the order of preference, with smaller numerals indicating greater preference. For the evaluation, a sensory test was performed by a group of five professional panelists. Vertex IG20 was added to give a concentration of 0.15%.

**[Table 10]**

| Ingredients | (Blank) | (Control) | (Vertex IG20) |
|---|---|---|---|
| | [(w/w)%] | [(w/w)%] | [(w/w)%] |
| Sodium nitrite | 0.02 | 0.02 | 0.02 |
| Spice mix | 0.6 | 0.6 | 0.6 |
| Vitamin C | 0.1 | 0.1 | 0.1 |
| Salt | 1.26 | 1.26 | 1.26 |
| Potassium chloride | 0 | 0.54 | 0.54 |
| Vertex IG20 | 0 | 0 | 0.15 |

**[Table 11]**

| | (Blank) | (Control) | (Vertex IG20) |
|---|---|---|---|
| Scores in the evaluation of acrid taste and/or metallic taste | 1.0 | 5.0 | 1.6 |
| Scores of preference | 2.0 | 3.0 | 1.0 |

From the data in Table 11, it became clear that Vertex IG20, when added to processed meat products, was effective not only for suppressing the KCI-derived acrid taste and/or metallic taste of but also for improving their palatability.

The present invention is applicable to a wide variety of industrial fields including the manufacture of food products, food-service industry, the manufacture of oral medicaments, the manufacture of therapeutic diet and care foods, as well as guidance about diet and nutritional guidance, and medicine.

## Claims

1. A food composition comprising
a yeast-derived peptide containing composition comprising nonpolar side-chain amino acids and neutral side-chain amino acids in such amounts that their sum accounts for at least 50 wt% of the amount of total peptides, and
potassium chloride.

2. The food composition according to claim 1, wherein the yeast-derived peptide containing composition accounts for at least 0.01 wt% of the potassium chloride.

3. The food composition according to claim 1 or 2, wherein the peptides have an average molecular weight of no more than 50,000.

4. The food composition according to claim 3, wherein the peptides are ones that pass through an ultrafiltration membrane having a cutoff molecular weight of 50,000 but not through an ultrafiltration membrane having a cutoff molecular weight of 3,000.

5. The food composition according to claim 4, wherein the yeast-derived peptide containing composition comprises 5'-ribonucleotide.

6. The food composition according to claim 5, wherein the yeast-derived peptide containing composition further comprises umami amino acids.

7. The food composition according to claim 1 or 2, which is a seasoning composition to be added to foods.

8. A method of suppressing the acrid taste and/or metallic taste derived from potassium chloride in a food composition, which comprises adding to a food composition a yeast-derived peptide containing composition comprising nonpolar side-chain amino acids and neutral side-chain amino acids in such amounts that their sum accounts for at least 50 wt% of the amount of total peptides, in an amount of at least 0.01 wt% of potassium chloride to be added, to suppress the acrid taste and/or metallic taste derived from the potassium chloride.

9. The method according to claim 8, wherein the peptides have an average molecular weight of no more than 50,000.

10. The method according to claim 8 or 9, wherein the peptides are ones that pass through an ultrafiltration membrane having a cutoff molecular weight of 50,000 but not through an ultrafiltration membrane having a cutoff molecular weight of 3,000.

11. A method of reducing the content of sodium chloride in a food composition, which comprises substituting potassium chloride and a yeast-derived peptide containing composition, in an amount of at least 0.01 wt% of the potassium chloride, comprising nonpolar side-chain amino acids and neutral side-chain amino acids in such amounts that their sum accounts for at least 50 wt% of the amount of total peptides for 10 to 90 wt% of the sodium chloride, wherein the potassium chloride compensates the salt taste of the sodium chloride, and the yeast-derived peptide containing composition suppresses the acrid taste and/or metallic taste derived from the potassium chloride.

12. The food composition according to any one of claims 1 to 7 for use in a method for suppressing the acrid taste and/or metallic taste derived from potassium chloride in a potassium chloride containing food.

## Patentansprüche

1. Lebensmittelzusammensetzung, die Folgendes umfasst:
- eine aus Hefe gewonnene Peptid-haltige Zusammensetzung, die Aminosäuren mit unpolaren Nebenketten und Aminosäuren mit neutralen Nebenketten in solchen Mengen enthält, dass ihre Summe mindestens 50 Gewichts-% der Menge an Gesamtpeptiden ausmacht, und
- Kaliumchlorid.

2. Lebensmittelzusammensetzung nach Anspruch 1, wobei die aus Hefe gewonnene Peptid-haltige Zusammensetzung mindestens 0,01 Gewichts-% des Kaliumchlorids ausmacht.

3. Lebensmittelzusammensetzung nach Anspruch 1 oder 2, wobei die Peptide ein durchschnittliches Molekulargewicht von maximal 50.000 haben.

4. Lebensmittelzusammensetzung nach Anspruch 3, wobei die Peptide solche sind, die eine Ultrafiltrationsmembran mit einem Grenzmolekulargewicht von 50.000 passieren, nicht aber eine Ultrafiltrationsmembran mit einem Grenzmolekulargewicht von 3.000.

5. Lebensmittelzusammensetzung nach Anspruch 4, wobei die aus Hefe gewonnene Peptid-haltige Zusammensetzung 5'-Ribonukleotid umfasst.

6. Lebensmittelzusammensetzung nach Anspruch 5, wobei die aus Hefe gewonnene Peptid-haltige Zusammensetzung des Weiteren Umami-Aminosäuren umfasst.

7. Lebensmittelzusammensetzung nach Anspruch 1 oder 2, bei der es sich um eine Gewürzzusammensetzung handelt, die Lebensmitteln zuzusetzen ist.

8. Verfahren zum Unterdrücken des bitteren Geschmacks und/oder metallischen Geschmacks von Kaliumchlorid in einer Lebensmittelzusammensetzung, das umfasst, einer Lebensmittelzusammensetzung eine aus Hefe gewonnene Peptid-haltige Zusammensetzung beizugeben, die Aminosäuren mit unpolaren Nebenketten und Aminosäuren mit neutralen Nebenketten in solchen Mengen enthält, dass ihre Summe mindestens 50 Gewichts-% der Menge an Gesamtpeptiden ausmacht, in einer Menge von mindestens 0,01 Gewichts-% Kaliumchlorid, die beizugeben ist, um den bitteren Geschmack und/oder metallischen Geschmack des Kaliumchlorids zu unterdrücken.

9. Verfahren nach Anspruch 8, wobei die Peptide ein durchschnittliches Molekulargewicht von maximal 50.000 haben.

10. Verfahren nach Anspruch 8 oder 9, wobei die Peptide solche sind, die eine Ultrafiltrationsmembran mit einem Grenzmolekulargewicht von 50.000 passieren, nicht aber eine Ultrafiltrationsmembran mit einem Grenzmolekulargewicht von 3.000.

11. Verfahren zum Reduzieren des Natriumchloridgehalts in einer Lebensmittelzusammensetzung, welches das Ersetzen von Kaliumchlorid und einer aus Hefe gewonnenen Peptidhaltigen Zusammensetzung umfasst, in einer Menge von mindestens 0,01 Gewichts-% des Kaliumchlorids, die Aminosäuren mit unpolaren Nebenketten und Aminosäuren mit neutralen Nebenketten in solchen Mengen enthält, dass ihre Summe mindestens 50 Gewichts-% der Menge an Gesamtpeptiden für 10 bis 90 Gewichts-% des Natriumchlorid ausmacht, wobei das Kaliumchlorid den Salzgeschmack des Natriumchlorids kompensiert und die aus Hefe gewonnene Peptid-haltige Zusammensetzung den bitteren Geschmack und/oder metallischen Geschmack des Kaliumchlorids unterdrückt.

12. Lebensmittelzusammensetzung nach einem der Ansprüche 1 bis 7 zur Verwendung in einem Verfahren zum Unterdrücken des bitteren Geschmacks und/oder metallischen Geschmacks von Kaliumchlorid in einem Kaliumchlorid-haltigen Lebensmittel.

## Revendications

1. Composition alimentaire comprenant :
- une composition contenant des peptide dérivés de levure comprenant des acides aminés à chaîne latérale non polaire et des acides aminés à chaîne latérale neutre en quantités telles que leur somme rend compte d'au moins 50 % en poids de la quantité de peptides totaux, et
- du chlorure de potassium.

2. Composition alimentaire selon la revendication 1, dans laquelle la composition contenant des peptides dérivés de levure rend compte d'au moins 0,01 % en poids du chlorure de potassium.

3. Composition alimentaire selon la revendication 1 ou 2, dans laquelle les peptides ont une masse moléculaire moyenne de pas plus de 50000.

4. Composition alimentaire suivant la revendication 3, dans laquelle les peptides sont ceux qui passent à travers une membrane d'ultrafiltration ayant un seuil de masse moléculaire de 50000 mais pas à travers une membrane d'ultrafiltration ayant un seuil de masse moléculaire de 3000.

5. Composition alimentaire selon la revendication 4, dans laquelle la composition contenant des peptides dérivés de levure comprend un 5'-ribonucléotide.

6. Composition alimentaire suivant la revendication 5, dans laquelle la composition contenant des peptides dérivés de levure comprend en outre des acides aminés umami.

7. Composition selon la revendication 1 ou 2, qui est une composition d'assaisonnement à ajouter aux aliments.

8. Procédé de suppression du goût âcre et/ou du goût métallique dérivé du chlorure de potassium dans une composition alimentaire, lequel comprend l'ajout à une composition alimentaire d'une composition contenant des peptides dérivés de levure comprenant des acides aminés à chaîne latérale non polaire et des acides aminés à chaîne latérale neutre en quantités telles que leur somme rend compte d'au moins 50 % en poids de la quantité de peptides totaux, en une quantité d'au moins 0,01 % en poids de chlorure de potassium à ajouter, pour supprimer le goût âcre et/ou le goût métallique dérivé du chlorure de potassium.

9. Procédé selon la revendication 8, dans lequel les peptides ont une masse moléculaire moyenne de pas plus de 50000.

10. Procédé selon la revendication 8 ou 9, dans lequel les peptides sont ceux qui passent à travers une membrane d'ultrafiltration ayant un seuil de masse moléculaire de 50000 mais pas à travers une membrane d'ultrafiltration ayant un seuil de masse moléculaire de 3000.

11. Procédé de réduction de la teneur de chlorure de sodium dans une composition alimentaire, qui comprend la substitution du chlorure de potassium et d'une composition contenant des peptides dérivés de levure, en une quantité d'au moins 0,01 % en poids du chlorure de potassium, comprenant des acides aminés à chaîne latérale non polaire et des acides aminés à chaîne latérale neutre en quantités telles que leur somme rend compte d'au moins 50 % en poids de la quantité des peptides totaux pour 10 à 90 % en poids du chlorure de sodium, dans lequel le chlorure de potassium compense le goût salé du chlorure de sodium, et la composition contenant des peptides dérivés de levure supprime le goût âcre et/ou le goût métallique dérivé du chlorure de potassium.

12. Composition alimentaire selon l'une quelconque des revendications 1 à 7 pour un usage dans un procédé afin de supprimer le goût âcre et/ou le goût métallique dérivé du chlorure de potassium dans un aliment contenant du chlorure de potassium.
